# EUROPEAN PATENT APPLICATION

(11) **EP 3 832 427 A1**
(43) Date of publication of application: **09.06.2021**
(21) Application number: 19275142.8
(22) Date of filing: 05.12.2019
(51) Int. Cl.: G05D 23/19

(54) **THERMAL MANAGEMENT APPARATUS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is provided a thermal management apparatus for use with a vehicle comprising: a chassis in thermal contact with one or more first components that require thermal management and one or more second components that require thermal management, wherein the chassis is configured to transfer heat from the one or more first components to the one or more second components.

## Description

### FIELD OF THE INVENTION

The present invention relates to a thermal management apparatus, a vehicle including a thermal management apparatus, a method of managing temperature in a thermal management apparatus and a method of manufacturing a thermal management apparatus.

### BACKGROUND

Many devices require thermal management to operate effectively and efficiently. Whilst many types of thermal management systems have been used, these often require bulky equipment and it can be difficult to thermally manage different components that have different thermal requirements within a device.

One particular device that may require thermal management is a High altitude long endurance (HALE) unmanned aircraft. These typically have long wingspans and low drag to improve their ability to operate efficiently for weeks or months at altitudes in excess of 15km. In some examples, HALE aircrafts includes one or more payloads comprising electronic components, such as sensors. Operating at relatively low speeds and at high altitudes, airflow over the aircraft's surfaces is low. Therefore, it is difficult to effectively remove heat generated by electronic components and friction of moving parts from the aircraft and/or payloads. In some examples, the components have different operating temperature ranges and so it can be difficult to ensure that each of the components are working within their operating temperature range.

It would not be appropriate to fit an air conditioning unit or an arrangement of pumps and/or fans to any device with stringent weight requirements, such as a HALE aircraft or a racing car. Further, it would not be appropriate to fit traditional thermal management apparatus to any devices or systems that have size constrains or only a small footprint in which to locate the thermal management apparatus.

Therefore, there is a need for a lightweight means for removing heat from or adding heat to these components.

### SUMMARY

According to one aspect, there is provided a thermal management apparatus comprising: a chassis; a first thermoelectric device that is thermally coupled to one or more first components and the chassis; and a second thermoelectric device that is thermally coupled to one or more second components and the chassis, wherein the first thermoelectric device and the second thermoelectric device are independently controllable.

The provision of a thermal management apparatus with these features means that a chassis may be at a similar temperature along its length, but because the first thermoelectric device and the second thermoelectric devices are independently controllable, e.g. being subject to a different voltage, the chassis "appears" colder in some areas than others. In other words, the flow of heat to or from the one or more first components may be different from the flow of heat to or from the one or more second components due to the presence of the independently controllable first thermoelectric device and second thermoelectric device. Further, the thermal management apparatus provides a way on controlling the temperature of multiple components that require thermal management that are all coupled with a single heat sink, obviating the need for multiple heat sinks in a system.

In one example, the first thermoelectric device is configured to provide a first rate of thermal transfer for the one or more first components and the second thermoelectric device is configured to provide a second rate of thermal transfer for the one or more second component, wherein the first level and the second level are different.

In one example, the chassis is a hollow tube and wherein a fluid is configured to flow through the hollow tube.

In one example, the first thermoelectric device and the second thermoelectric device may be configured to transfer heat from the chassis to the one or more first components and the one or more second components.

In one example, the first thermoelectric device and the second thermoelectric device are configured to transfer heat from the one or more first components and the one or more second components to the chassis.

The thermal management apparatus may include: the one or more first components; and the one or more second components, wherein the one or more first components have a first power output; and the one or more second components have a second set power output, wherein the first power output is substantially different than the second power output.

The first thermoelectric device and the second thermoelectric device may each have a first side and a second side, opposite the first side, wherein the first side of the first thermoelectric device abuts the one or more first components and the second side of the first thermoelectric device abuts the chassis. The first side of the second thermoelectric device may abut the one or more second component and the second side of the second thermoelectric device abuts the chassis.

The thermal management apparatus may include a controller configured to generate a first control signal for the first thermoelectric device and generate a second control signal for the second thermoelectric device.

The thermal management apparatus may comprise a first temperature sensor configured to measure the temperature of the one or more first components and a second temperature sensor configured to measure the temperature of the one or more second components.

The controller may be configured to receive the measured temperature of the one or more first components and the measured temperature of the second component and generate a first control signal for the first thermoelectric device and generate a second control signal for the second thermoelectric device.

The first thermoelectric device may be a first Peltier device and the second thermoelectric device may be a second Peltier device.

According to one aspect, there is provided a vehicle comprising the thermal management apparatus as described above.

The vehicle may be a High Altitude Long Endurance aircraft.

According to one aspect, there is provided a method of managing temperature in a thermal management apparatus the method comprising: measuring the temperature of the one or more first components; measuring the temperature of the one or more second components; transmitting a first control signal for the first thermoelectric device based on the measured temperature of the one or more first components; and transmitting a second control signal to the second thermoelectric device based on the measured temperature of the one or more second components.

According to one aspect, there is provided a method of manufacturing a thermal management apparatus as described above. The method includes the steps of providing a chassis; providing a first thermoelectric device that is thermally coupled to one or more first components and the chassis; and providing a second thermoelectric device that is thermally coupled to one or more second components and the chassis, wherein the first thermoelectric device and the second thermoelectric device are independently controllable.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings.
Figure 1 is a perspective view of an aircraft;
Figure 2 is a schematic diagram of a thermal management apparatus according to embodiments of the present invention;
Figure 3 is a plan view of an aircraft having a thermal management system according to embodiments of the present invention;
Figure 4 is an example of a method of managing temperature in a thermal management apparatus; and

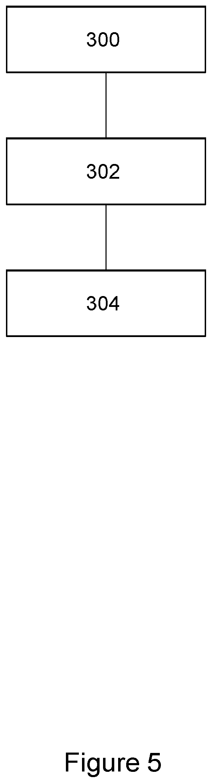

Figure 5 is an example of a method of manufacturing a thermal management apparatus.

For convenience and economy, the same reference numerals are used in different figures to label identical or similar elements.

### DETAILED DESCRIPTION

Embodiments herein generally relate to a thermal management apparatus. The thermal management system includes a chassis with one or more components thermally coupled with the chassis. For example, there may be a first component and a second component or one or more first components and one or more second components. The first and second components may be electrical components that generate heat through their use and so may require heat to be extracted during use. In some examples, the first and second components have an operating temperature range in which they are designed to operate effectively. As such, the first and second components may require the addition of, or removal of, heat in order to operate within their desired operating temperature range.

The thermal management apparatus includes a first thermoelectric device coupled to the one or more first components and a second thermoelectric device coupled to the one or more second components. Each of the first thermoelectric device and the second thermoelectric device may receive an individual control signal. In other words, the first thermoelectric device and the second thermoelectric device are independently controllable. The first thermoelectric device may effect a first level of heat transfer between the one or more first components and the chassis and the second thermoelectric device may effect a second level of heat transfer between the one or more second components and the chassis. The first thermoelectric device and the second thermoelectric device may both use the chassis as a heat sink or source.

Providing a first thermoelectric device and a second thermoelectric device in this way means that the temperature of the first component and the temperature of the second component can be individually controlled such that they both operate within their operating temperature range. Further, the chassis may act as a common heat sink for the one or more first components and the one or more second components via the first thermoelectric device and the second thermoelectric device respectively.

Prior art thermal management systems include, for example, radiators for cooling engines on cars or coolant systems powered by an auxiliary power unit for avionics bays in aircraft. These tend to be relatively heavy and complex systems and so are undesirable to include in apparatus, such as vehicles that have weight restrictions.

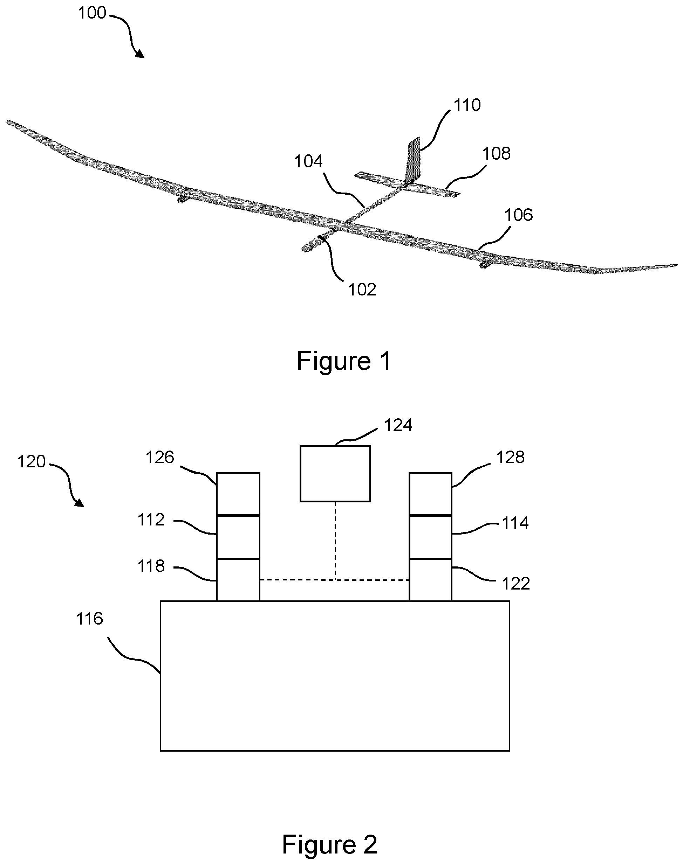

Figure 1 shows an illustrative example of an aircraft 100, specifically a HALE unmanned aeroplane. While an aircraft 100 is shown here, it would be readily appreciated that the present invention is applicable to other types of devices requiring thermal management, or other vehicles, such as cars, ships, spacecraft, airships and trains.

The present invention is particularly applicable to apparatus having components having different operating temperatures that operate within the vicinity of each other. Further, the present invention is applicable to apparatus having burdensome weight restrictions, as the thermal management apparatus described herein tends to be relatively lightweight.

The aircraft 100 includes a wing member 106. In one example, the wing span of the wing member 106 is approximately 35 metres and has a relatively narrow chord (i.e. of the order 1 metre). The wing member 106 is coupled to a fuselage 104. To aerodynamically balance the aircraft 100, a horizontal tail plane 108 and a vertical tail fin (or vertical stabilizer) 110 are coupled to the rear of the fuselage 104. A payload module 102 may be coupled to the front of the fuselage 104, i.e. the nose of the aircraft 100. An engine having a propeller is mounted to the wing member 106 on both sides of the fuselage 104. The engines may be powered by a combination of solar panels mounted to the upper surfaces of the wing member 106 and batteries disposed inside the fuselage 104 and/or wing member 106.

The aircraft 100 may be of lightweight construction. For example, the fuselage 104, wing member 106, payload module 102, tailplane 108 and tail fin 110 may be made of a monocoque carbon fibre laminate skin structure. In other words, the skin forms the aircraft's body. In other embodiments, the body is substantially made of a lightweight metal, such as titanium, titanium alloy, aluminium or aluminium alloy.

Figure 2 shows a schematic diagram of a thermal management apparatus 120 that may be used with a device requiring thermal management, such as the aircraft 100. The thermal management apparatus 120 may not necessarily be restricted for use with a vehicle and may be used with any system that requires thermal management.

Figure 2 shows an example of a thermal management apparatus 120 comprising a chassis 116 that is thermally coupled with one or more first components 112 and one or more second components 114.

In one example, the thermal management apparatus 120 is the payload module 102 of a vehicle, such as an aircraft 100, but in other examples, the thermal management apparatus 120 is a separate element. For example, the thermal management apparatus 120 may comprise a pod that is coupled with the vehicle.

Whilst both the one or more first components 112 and the one or more second components 114 may generate heat, in some examples, the one or more first components 112 and the one or more second components 114 may generate different amounts of heat. For example, the one or more first components 112 may generate more heat compared with the one or more second components 114. In some examples, the one or more first components 112 and the one or more second components 114 require additional heat in order to work within their temperature operating range. The one or more first components 112 and the one or more second components 114 may require different levels of additional heat in order to work within their temperature operating range. In one example, the one or more first components 112 may generate excess heat and require a heat sink to expel heat to, whereas the one or more second components 114 may require additional heat in order to work effectively.

The aircraft 100 may be deployed at a high altitude so the temperature and pressure of the surrounding air may be very low. Due to the relatively low airspeed of air crossing the surfaces of the aircraft 100, and the low air density at the high altitudes at which it tends to operate, it can be difficult to draw heat away from the aircraft 100 and so it may be difficult to draw heat away from the one or more first components 112 and the one or more second components 114. It is important to draw heat away from heat sources, such as the one or more first components 112 and one or more second components 114, at least in some circumstances, to prevent damage to components of the aircraft 100 or to prevent a reduction in their performance.

As such, it can be difficult to transfer heat to the one or more first components 112 and/or one or more second components 114. It can also be difficult to draw heat away from the one or more first components 112 and/or the one or more second components 114.

In one example, the one of more first components 112 and/or the one or more second components 114 may comprise electrical devices, such as camera equipment, a processor, batteries or radio equipment.

The thermal management apparatus 120 includes a first thermoelectric device 118 that is thermally coupled to the one or more first components 112 and the chassis 116. The thermal management apparatus 120 includes a second thermoelectric device 122 that is thermally coupled to the one or more second components 114 and the chassis 116. The first thermoelectric device 118 and the second thermoelectric device 122 are configured to transfer heat from or to the one or more first components 112 and the one or more second components 114 respectively.

Thermoelectric devices operate by the Peltier effect (which also goes by the more general name thermoelectric effect). The thermoelectric device has two sides, and when a DC electric current flows through the thermoelectric device, it brings heat from one side to the other, so that one side gets cooler while the other gets hotter. The "hot" side is attached to a heat sink so that it remains at ambient temperature, while the cool side goes below room temperature. Thermoelectric devices may be reversible, i.e. either side may operate as the "hot" side and the "cold" side, depending on the voltage applied.

In one example, the first thermoelectric device 118 may be configured to draw heat from the one or more first components 112 and transfer the heat the chassis 116 at a first rate and the second thermoelectric device 122 may be configured to draw heat from the one or more second components 114 and transfer the heat the chassis 116 at a second rate. In one example, this could be achieved by applying a first voltage to the first thermoelectric device 118 and applying a second, different, voltage to the second thermoelectric device 122.

Providing a first thermoelectric device 118 and a second thermoelectric device 122 means the chassis 116 may operate as a heat sink/source with a different temperature for the one or more first components 112 and the one or more second components 114. In other words, the one or more first components 112 and the one or more second components 114 effectively "see" the chassis 116 in a different way, i.e. the one or more first components 112 operate as if the chassis 116 has a first temperature, whereas the one or more second components 114 operate as if the chassis 116 has a second temperature.

In one example, the first thermoelectric device 118 comprises a first Peltier device. The second thermoelectric device 122 may comprise a second Peltier device.

The first thermoelectric device 118 and the second thermoelectric device 122 may be configured to apply heat to the one or more first components 112 and the one or more second components 114 respectively. In other words, the first thermoelectric device 118 and the second thermoelectric device 122 may be configured to draw heat from the chassis 116 and transfer the heat to the one or more first components 112 and the one or more second components 114 respectively. Heat may be drawn from the chassis 116 and transferred to the one or more first components 112 via the first thermoelectric device 118 at a first rate and heat may be drawn from the chassis 116 and transferred to the one or more second components 114 via the second thermoelectric device 122 at a second rate.

In one example, the one or more first components 112 is directly coupled to the first thermoelectric device 118. In other words, the one or more first components 112 may abut the first thermoelectric devices 118. In one example, the one or more second components 114 is directly coupled to the second thermoelectric device 122. In other words, the one or more second components 114 may abut the second thermoelectric devices 122.

In one example, the first thermoelectric device 118 is directly coupled to the chassis 116. In other words, the first thermoelectric device 118 may abut the chassis 116. In one example, the second thermoelectric device 122 is directly coupled to the chassis 116. In other words, the second thermoelectric device 122 may abut the chassis 116.

The first thermoelectric device 118 and the second thermoelectric device 122 may each have a first side and a second side, opposite the first side. The first side of the first thermoelectric device 118 may abut the one or more first components 112 and the second side of the first thermoelectric device 118 may abut the chassis 116. The first side of the second thermoelectric device 122 may abut the one or more second components 114 and the second side of the second thermoelectric device 122 may abut the chassis 116.

In one example, the one or more first components 112 are also physically coupled to the chassis 116 of the thermal management apparatus 120. The one or more second components 114 may also be physically coupled to chassis 116 of the thermal management apparatus 120. For example, the one or more first components 112 may be releasably attached to the chassis 116 of the thermal management apparatus 120 and the one or more second components 114 may also be releasably attached to chassis 116 of the thermal management apparatus 120. In other examples, the one or more first components 112 are fixed to the chassis 116 of the thermal management apparatus 120 and the one or more second components 114 are fixed to chassis 116 of the thermal management apparatus 120. In these examples, the first thermoelectric device 118 would still be thermally coupled to the one or more first components 112 and the chassis 116 and the second thermoelectric device 122 would still be thermally coupled to the one or more second components 114 and the chassis 116.

The chassis 116 may be a part of the fuselage or structural elements of the apparatus that requires thermal management. In other words, the first thermoelectric device 118 and the second thermoelectric device 122 may use the structure of the apparatus itself as a heat sink or heat source. In other words, the first thermoelectric device 118 is thermally coupled to one or more first components 112 and an element or fuselage of the system to be thermally managed. The second thermoelectric device 122 is thermally coupled to one or more second components 114 and an element or fuselage of the system to be thermally managed. The first thermoelectric device 118 and the second thermoelectric device 122 are independently controllable.

In one example, the chassis 116 of the thermal management apparatus 120 is substantially hollow such that a fluid, such as air, may flow through a flow path in the chassis 116 of the thermal management apparatus 120. In this example, the one or more first components 112 may be located "upstream" of the one or more second components 114. In one example, the chassis 116 is formed of a hollow tube. In this example, the one or more first components 112 and the one or more second components 114 may be coupled or attached to an outside surface of the hollow tube chassis 116.

In some examples, the first thermoelectric device 118 and the second thermoelectric device 122 of the thermal management apparatus 120 are configured to substantially equalise the temperature of the one or more first components 112 and the one or more second components 114. In other words, the first thermoelectric device 118 and the second thermoelectric device 122 are independently controllable. Providing a first thermoelectric device 118 and second thermoelectric device 122 that are independently controllable facilitates the use of one or more first components 112 and one or more second components 114 that have different power or temperature requirements.

The thermal management apparatus 120 may include a controller 124 to configured to generate a first control signal for the first thermoelectric device 118 and generate a second control signal for the second thermoelectric device 122.

In one example, the controller 124 may be preconfigured based on known required rates of cooling of the one or more first components 112 and the one or more second components 114.

In one example, the thermal management apparatus 120 includes one or more temperature sensors 126, 128. The one or more temperature sensors 126, 128 may be configured to determine the temperature of the one or more first components 112 and the temperature of the one or more second components 114. In one example, the one or more temperature sensors 126, 128 may comprise a first temperature sensor 126 to measure the temperature of the first set of components 112 and a second temperature sensor 128 to measure the temperature of the one or more second components 114.

The controller 124 may be configured to receive the measured temperature of the one or more first components 112 and the measured temperature of the one or more second components 114 and generate a first control signal for the first thermoelectric device 118 and generate a second control signal for the second thermoelectric device 122.

The first control signal and the second control signal may be indicative of a voltage to be applied to the first thermoelectric device 118 and the second thermoelectric device 122 respectively. In some examples, the first control signal and the second control signal are received by a voltage generator that generates a first voltage for the first thermoelectric device 118 based on the first control signal and generates a second voltage for the second thermoelectric device 122 based on the second control signal.

The one or more temperature sensors 126, 128 may be, for example, a thermocouple. The one or more temperature sensors 126, 128 may be incorporated onto a MEMS chip. In some embodiments, the first temperature sensor 126 may be integrated with the one or more first components 112 and the second temperature sensor 128 may be integrated with the one or more second components 114. In other embodiments, the first temperature sensor 126 is disposed adjacent to the one or more first components 112 and the second temperature sensor 128 is disposed adjacent to the one or more second components 114.

The one or more temperature sensors 126, 128 may be electrically coupled to the controller 124. The one or more temperature sensors 126, 128 may transmit a continuous signal to the controller 124 indicative of the temperature of the one or more first components 112 and/or the one or more second components 114. In embodiments where there is a plurality of first components 112, there may be a plurality of first temperature sensors 126, each associated with each first component 112. In embodiments where there is a plurality of second components 114, there may be a plurality of second temperature sensors 128, each associated with each second component 114.

The controller 124 may take any suitable form. For instance, it may be a microcontroller, plural microcontrollers, a processor, or plural processors. The controller 124 may receive the signal indicative of temperature of the one or more first components 112 from the first temperature sensor 126. The controller 124 may receive the signal indicative of temperature of the one or more second components 114 from the second temperature sensor 128.

The controller 124 may compare the temperature of the one or more first components 112 with a first threshold temperature. The first temperature threshold may be indicative of an operating temperature (or a range of operating temperatures) in which the one or more first components 112 is configured to operate effectively.

The controller 124 may compare the temperature of the one or more second components 114 with a second threshold temperature. The second temperature threshold may be indicative of an operating temperature (or a range of operating temperatures) in which the one or more second components 114 is configured to operate effectively.

The controller 124 may process the received temperatures and generate a first control signal for the first thermoelectric device 118 to effect a first rate of heat transfer for the one or more first components 112. For example, if the temperature of the one or more first components 112 is higher than the first threshold, then the controller 124 determines that the one or more first components 112 has generated excess heat and generates a first control signal for the first thermoelectric device 118 to remove heat from the one or more first components 112.

Alternatively, if the temperature of the one or more first components 112 is lower than the first threshold, then the controller 124 determines that that the one or more first components 112 requires additional heat and generates a first control signal for the first thermoelectric device 118 to provide heat for the one or more first components 112.

The controller 124 will also perform the same process for the one or more second components 114. For example, it will compare the temperature of the one or more second components 114 with a second threshold and generate a control signal for the second thermoelectric device 122 to generate or remove heat from the one or more second components 114, as required.

The controller 124 may process the received temperatures and generate a first control signal for the first thermoelectric device 118 to effect a first rate of heat transfer for the one or more first components 112. For example, if the temperature of the one or more first components 112 is higher than the first threshold, then the controller 124 determines that the one or more first components 112 has generated excess heat and generates a first control signal for the first thermoelectric device 118 to remove heat from the one or more first components 112.

Further, if the temperature of the one or more second components 114 is lower than the second threshold, then the controller determines that that the one or more second components 114 requires additional heat and generates a second control signal for the second thermoelectric device 122 indicative of this requirement.

This may be advantageous where a system on-board the aircraft 100 has several components that operate at different powers and temperatures. For example, Commercial Off the Shelf (COTS) derived equipment (e.g. optics, router or radios) may not be able to operate correctly or effectively at the altitudes (i.e. low temperatures) at which the HALE aircraft typically operate.

In one example, the thermal management apparatus 120 includes one or more additional thermoelectric devices (not shown) in order to provide heating control to one or more further components (not shown).

In one example, the thermal management apparatus 120 comprises a coating configured to radiate excess heat from the chassis 116. For example, the outside of the chassis 116 is coated with black paint.

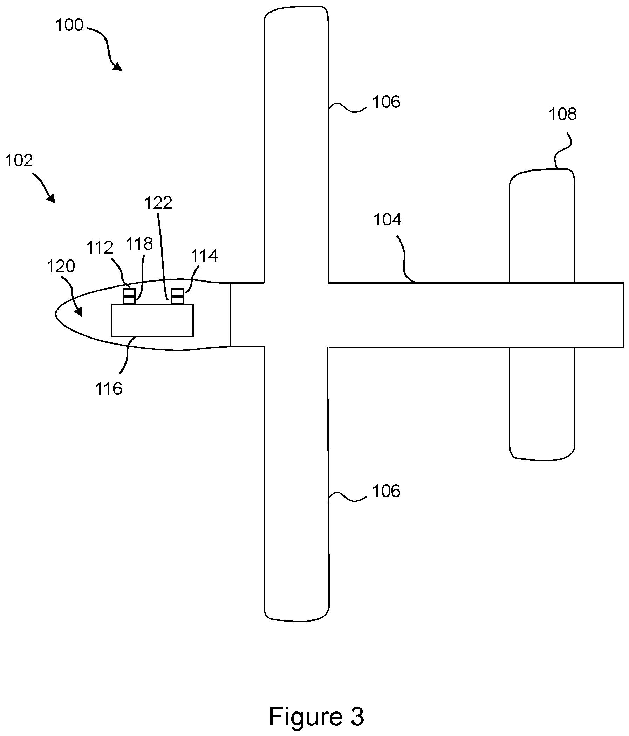

Figure 3 shows a plan view of a thermal management apparatus 120 implemented in an aircraft 100.

In this example, the thermal management apparatus 120 comprises a pod that is configured to couple with the vehicle. In the example shown in Figure 3, the thermal management apparatus 120 is coupled to the front of the vehicle, but in other examples, the thermal management apparatus 120 is coupled to another part of the vehicle 100. In some examples, the thermal management apparatus 120 is a part of the vehicle 100 itself, for example, as described above, the thermal management apparatus 120 may be the payload 102. In one example, the thermal management apparatus 120 may be coupled to a balloon.

In the example shown in figure 3, the chassis 116 acts as the physical interface between the one or more first components 112, the one or more second components 114 and the apparatus, such as an aircraft 100. This makes efficient use of the space, weight and power constraints associated with the operating environment.

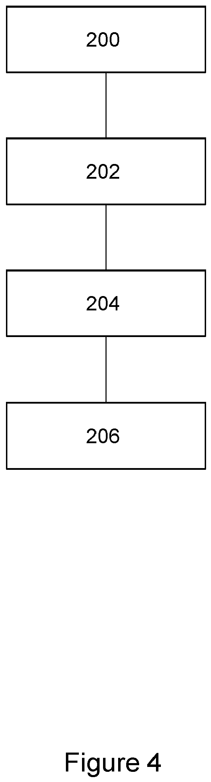

Figure 4 shows an example of a method of managing the temperature in a thermal management apparatus.

As step 200, the temperature of one or more first components 112 is measured.

At step 202, the temperature of one or more second components 114 is measured.

At step 204, a first control signal is transmitted for the first thermoelectric device 118 based on the measured temperature of the one or more first components 112.

At step 206, a second control signal is transmitted to the second thermoelectric device 122 based on the measured temperature of the one or more second components 114.

A method of manufacturing a thermal management apparatus 120 is provided.

At step 300, a chassis 116 is provided.

At step 302, a first thermoelectric device 118 is provided that is thermally coupled to one or more first components 112 and the chassis 116.

At step 304, a second thermoelectric device 122 is provided that is thermally coupled to one or more second components 114 and the chassis 116. The first thermoelectric device 118 and the second thermoelectric device 122 are independently controllable.

Embodiments herein have described the thermal management apparatus 120 with reference to an aircraft 100. However, it would be appreciated that other types of devices are anticipated. For example, the lightweight construction of the thermal management apparatus is readily applicable to sports cars, for example Formula 1™ cars, or lighter-than-air vehicles, such as balloons. Further, the thermal management apparatus 120 could be used with any device having size constraints or a small footprint in which to resolve the thermal solution. In one example, the thermal management apparatus 120 could be used with an undersea remotely operate vehicle, where water is used as the cooling medium through a heatsink. Undersea remotely operate vehicles have a space constraint for their thermal management apparatus 120.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A thermal management apparatus comprising:
a chassis;
a first thermoelectric device that is thermally coupled to one or more first components and the chassis; and
a second thermoelectric device that is thermally coupled to one or more second components and the chassis,
wherein the first thermoelectric device and the second thermoelectric device are independently controllable.

2. The thermal management apparatus according to claim 1, wherein the first thermoelectric device is configured to provide a first rate of thermal transfer for the one or more first components and the second thermoelectric device is configured to provide a second rate of thermal transfer for the one or more second component, wherein the first level and the second level are different.

3. The thermal management apparatus according to any one of claims 1 or 2, wherein the chassis is a hollow tube and wherein a fluid is configured to flow through the hollow tube.

4. The thermal management apparatus according to any one of claims 1, 2 or 3, wherein the first thermoelectric device and the second thermoelectric device are configured to transfer heat from the chassis to the one or more first components and the one or more second components.

5. The thermal management apparatus according to any one of claims 1, 2 or 3, wherein the first thermoelectric device and the second thermoelectric device are configured to transfer heat from the one or more first components and the one or more second components to the chassis.

6. The thermal management apparatus according to any one of the preceding claims, comprising:
the one or more first components; and
the one or more second components, wherein the one or more first components have a first power output; and the one or more second components have a second set power output, wherein the first power output is substantially different than the second power output.

7. The thermal management apparatus according to claim 6, wherein the first thermoelectric device and the second thermoelectric device each have a first side and a second side, opposite the first side,
wherein the first side of the first thermoelectric device abuts the one or more first components and the second side of the first thermoelectric device abuts the chassis,
wherein the first side of the second thermoelectric device abuts the one or more second component and the second side of the second thermoelectric device abuts the chassis.

8. The thermal management apparatus according to any one of the preceding claims, comprising a controller configured to generate a first control signal for the first thermoelectric device and generate a second control signal for the second thermoelectric device.

9. The thermal management apparatus according to claim 8, comprising a first temperature sensor configured to measure the temperature of the one or more first components and a second temperature sensor configured to measure the temperature of the one or more second components.

10. The thermal management apparatus according to claim 9, wherein the controller is configured to receive the measured temperature of the one or more first components and the measured temperature of the second component and generate a first control signal for the first thermoelectric device and generate a second control signal for the second thermoelectric device.

11. The thermal management apparatus according to any one of the preceding claims, wherein the first thermoelectric device is a first Peltier device and the second thermoelectric device is a second Peltier device.

12. A vehicle comprising the thermal management apparatus according to any one of the preceding claims.

13. The vehicle according to claim 12, wherein the vehicle is a High Altitude Long Endurance aircraft.

14. A method of managing temperature in a thermal management apparatus of any one of claims 1 to 11, comprising:
measuring the temperature of the one or more first components;
measuring the temperature of the one or more second components;
transmitting a first control signal for the first thermoelectric device based on the measured temperature of the one or more first components; and
transmitting a second control signal to the second thermoelectric device based on the measured temperature of the one or more second components.

15. A method of manufacturing a thermal management apparatus of any one of claims 1 to 11, comprising:
providing a chassis;
providing a first thermoelectric device that is thermally coupled to one or more first components and the chassis; and
providing a second thermoelectric device that is thermally coupled to one or more second components and the chassis,
wherein the first thermoelectric device and the second thermoelectric device are independently controllable.
